# EUROPEAN PATENT SPECIFICATION

(11) **EP 0 562 094 B1**
(45) Date of publication and mention of the grant of the patent: **10.05.1995**
(21) Application number: 92922046.5
(22) Date of filing: 30.09.1992
(51) Int. Cl.: B60B 27/00, F16C 33/66

(54) **LUBRICATION SYSTEM IN A WHEEL SUPPORT DEVICE WITH WHEEL HUB ROTATABLY MOUNTED ON AN AXLE JOURNAL**
Schmiervorrichtung für Radhaltevorrichtung mit Radnabe drehbar montiert auf einem Aschsschenkel
SYSTEME DE LUBRIFICATION SITUE DANS UN DISPOSITIF DE SUPPORT DE ROUE DONT LE MOYEU EST MONTE ROTATIF SUR UNE FUSEE D'ESSIEU

(30) Priority: 10.10.1991 SE 9102928
(43) Date of publication of application: 29.09.1993
(73) Proprietor: SCANIA CV AKTIEBOLAG, S-151 87 Södertälje (SE)
(72) Inventor: ANDERSSON, Uno, S-646 00 Gnesta (SE); JOHANSSON, Arne, S-151 39 Södertälje (SE); WARMENIUS, Bo, S-155 00 Nykvarn (SE)
(86) International application number: SE9200683
(87) International publication number: WO9307013

(56) References cited:
- EP-A- 0 002 569
- US-A- 4 576 256

## Description

This invention relates to a lubrication system of the type indicated in the preamble to patent claims 1 and 8 respectively.

### State of the art

In the motor industry lubricating oil systems are now used for wheel support devices of the aforementioned type in which oil is ejected, by the action of the centrifugal force generated when the hub rotates, towards the inside of the hub cap and lubricates the radially outer parts of the hub gear, at least when the wheel mounted on the hub rotates at sufficiently high speed.

In this case, however, the lubrication system is not one in which the oil is caused to flow in a well-defined, controlled circuit through the hub and bearings, guaranteeing perfect lubrication of both the outer and inner bearing during normal operation. At best the known lubrication systems merely cause the oil in practice to splash on to the outer bearing due to the tooth engagements between the gearwheels in the radially outer parts of the hub gear, and only in exceptional cases is the oil able to penetrate the inner bearing. Instead the bearings receive their main lubrication when the wheel (hub) is rotating at low speed, or when it is not rotating at all (stationary vehicle). For in this case the oil is at such a high level in the bottom half of the hub and the hub gear housed in it that at least the lower parts of the wheel bearings are below the level of the oil surface. Consequently these known systems only operate satisfactorily in vehicles which are not driven for long consecutive distances without stopping but which are instead stopped fairly regularly, or are at least driven at relatively low speed occasionally.

However, in the case of vehicles which are driven longer distances at relatively high speed, without interruption, lubrication problems must be expected as a result of the failure of the lubrication system to ensure perfect lubrication of the outer, and particularly the inner wheel bearings under such conditions. Not infrequently such problems give rise to the risk of damaged, blue tarnished bearings.

As examples of the aforementioned prior art reference can be made to the lubrication arrangement described in EP-A-0 002 569. In this known arrangement lubricating oil in a wheel hub is able to run from a common oil reservoir in a circuit via the outer and inner wheel bearings respectively.

In one (the first) of the circuits oil runs, without being controlled by any oil control mechanism, from the reservoir through ducts and spaces axially outside the outer wheel bearing, and from there on through a duct for lubricating this bearing, to an annular chamber located between the outer and inner wheel bearing. From this chamber oil can then return via a further duct to the space outside the outer bearing.

In the second circuit oil can run, again without being controlled by any oil control mechanism, from the annular chamber located between the bearings through a special duct for lubricating the inner wheel bearing, then to a space outside this bearing, from where the oil can then return via a return duct to the annular chamber between the wheel bearings.

In this known arrangement the oil in the second circuit is able to circulate past the inner wheel bearing a number of times in direct succession without meanwhile being forced back to the oil reservoir common to the circuits outside the outer bearing, and is therefore mixed with cooler oil. Moreover, the oil which passes through in the first circuit and lubricates the outer wheel bearing is certainly able to return to the common oil reservoir after completing the circuit (via the space outside the outer bearing), but here to there is nothing preventing the oil from instead repeating the circuit through the bearing several times without meanwhile being forced back to the oil reservoir and there mixed with cooler oil.

Thus the known lubrication arrangement provides absolutely no guarantee that adequate oil flows (at a sufficiently low oil temperature) will really be achieved and lubricate both the outer and inner wheel bearing to ensure perfect lubrication/cooling both bearings.

### Object of the invention

The primary object of this invention is therefore to avoid the above-mentioned problems in known lubrication systems and to achieve perfect lubrication/cooling of both bearings in all operating conditions of the vehicle.

The objects mentioned are achieved according to the invention in that the lubrication system of the type indicated in the preamble exhibits the distinctive features indicated in the characterising part of patent claims 1 and 8 respectively. The claims which are not independent indicate distinctive features of further developments of the lubrication system according to claims 1 and 8 respectively.

The basic concept of the invention is therefore to guarantee the lubrication of both bearings aimed at by forcing oil to flow constantly in circuits from the annular oil storage space radially into the common arc-shaped chamber located between the bearings, and from this chamber past and through each of the wheel bearings via a separate circuit path for each bearing, and then back to the annular oil storage space where the oil is mixed with cool oil before it flows out again into the respective circuits.

The forced oil flow radially inwards from the oil storage space to the circuits is provided in an advantageous embodiment by forcing the oil into the arc-shaped chamber between the wheel bearings by means of the kinetic energy which the oil has in the rotating oil volume in the rotating oil storage space of the hub gear, and which is partially converted to pressure in the oil when it is forcefully deflected inwards from the rotating oil volume by means of the oil control mechanism (oil collector).

This pressure feed of oil to the common chamber between the wheel bearings ensures that there is always a sufficient quantity of oil at all times for the circuits through both bearings.

In the bearing circuits the oil which has passed through the bearings in question cannot flow back to the arc-shaped chamber between the bearings (and is there mixed with oil from the second bearing) until the oil has been returned to the common annular oil storage space on the periphery of the hub gear via the oil return passages of the respective bearings. The heated (hot) oil from each bearing will therefore always be mixed first with cooler oil in the oil storage space before it again flows radially onwards to the arc-shaped chamber between the bearings and then continues from the chamber out into the respective bearing circuits.

The pressure generating deflection of lubricating oil from the rotating oil volume is therefore provided by the flow deflecting oil collecting device, which can, for example, be designed as indicated in claims 3 and 4 respectively.

A design in which the oil collector has two opposing inlets affords the advantage that one and the same type of oil collector can be used in both the hubs for the wheels on the right-hand side of vehicles and in the hubs for the wheels on the left-hand side.

Between the wheel bearings there may be one or more arc-shaped chambers from which the oil flows into the different circuits in the two bearings.

A preferred embodiment, with two such arc-shaped chambers separated by "pockets", is indicated in claim 7. These pockets ensure that oil which has passed through the inner bearing can be returned to the oil storage space by a simple method, from the point of view of design, without the risk of being mixed beforehand with oil which already exists in or is on its way into the arc-shaped chamber or chambers between the bearings for further distribution out into the oil circuits of the two bearings.

### Brief description of the drawings

The invention will now be further explained and illustrated below with a description of and reference to an embodiment of the lubrication system shown in the attached drawings.

In the drawings:
Fig. 1 shows, partially in section, a wheel support device with a lubrication system according to the invention, and a first design of the oil collection mechanism, whilst Fig. 1a shows a corresponding lubrication system with an alternative, second design of the oil collection mechanism,
Fig. 2 shows in principle a cross-section through the device in Fig. 1 (at the point of intersection II-II in Fig. 1),
Fig. 3 shows a front view of the oil control mechanism designed as an oil collector, shown in Fig. 1,
Fig. 4 shows a lateral view of the oil collector in Fig. 3, and
finally Fig. 5 shows, in a view corresponding to Fig. 1, an alternative, simplified design of a lubrication system according to the invention.

### Description of embodiments

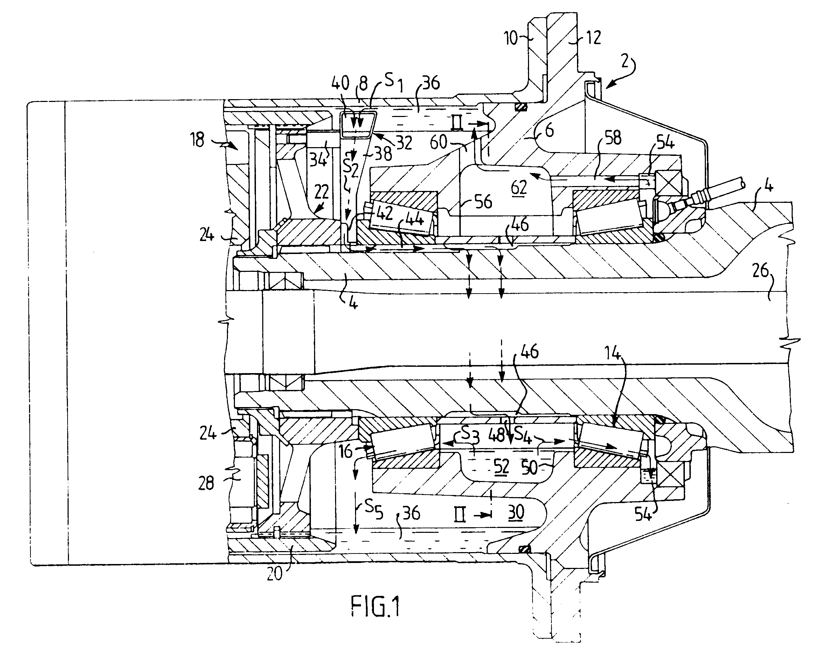

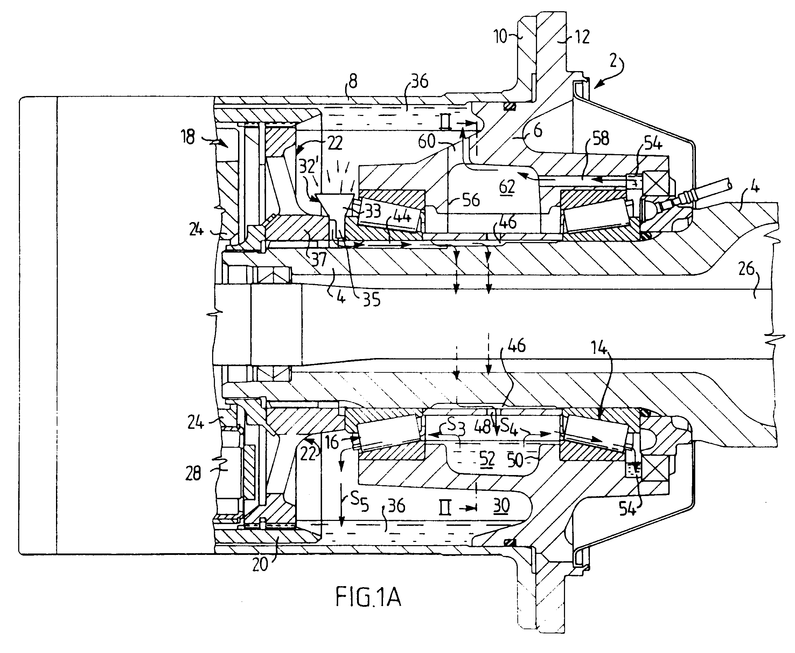

Reference is first made to Fig. 1, which shows a wheel support device in the form of a wheel hub 2, which is mounted by means of roller bearings on a non-rotating axle journal 4, which is connected to a wheel suspension component belonging to a vehicle (not shown). Wheel hub 2 comprises an axially inner housing part 6 and an outer hub cap 8 connecting to it, which cap is rigidly connected, by means of a radial flange section 10, to a hub disk 12 belonging to housing part 6. In the embodiment shown wheel hub 2 is rotatably mounted on axle journal 4 by means of an inner wheel bearing 14 and an outer wheel bearing 16, both in the form of taper roller bearings. The wheel support device shown in Fig. 1 is intended mainly for a driven wheel in a truck, which is the reason why the axial outer part of wheel hub 2 contains a hub gear 18 of prior art, comprising among other things an inner gearwheel 20, supported on axle journal 4 by means of a carrier 22, and a planet wheel holder 24, which supports planet gearwheels in driving engagement with inner gearwheel 20 on the one hand and a sun wheel (not shown) rigidly mounted on a rotary drive shaft 26. The planet wheels are therefore located inside the unslotted section of hub cap 8, and Fig. 1 only shows the right end of the bearing journal 28 of a planet wheel.

An annular oil storage space 30 for the lubricating oil enclosed in wheel hub 2, used for lubricating both hub gear 18 and the two wheel bearings 14 and 16, is provided inside hub cap 8.

An oil control mechanism, in the form of an oil collector 32, is located inside hub cap 8, on the right-hand side of hub gear 18, in the area above axle journal 4, which oil collector is rigidly arranged in relation to axle journal 4 in that the collector is fixed in carrier 22 rigidly connected to axle journal 4 via a support mechanism 34.

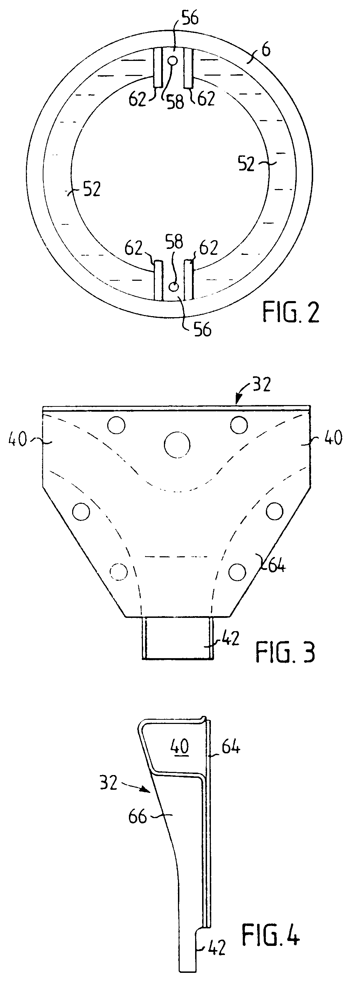

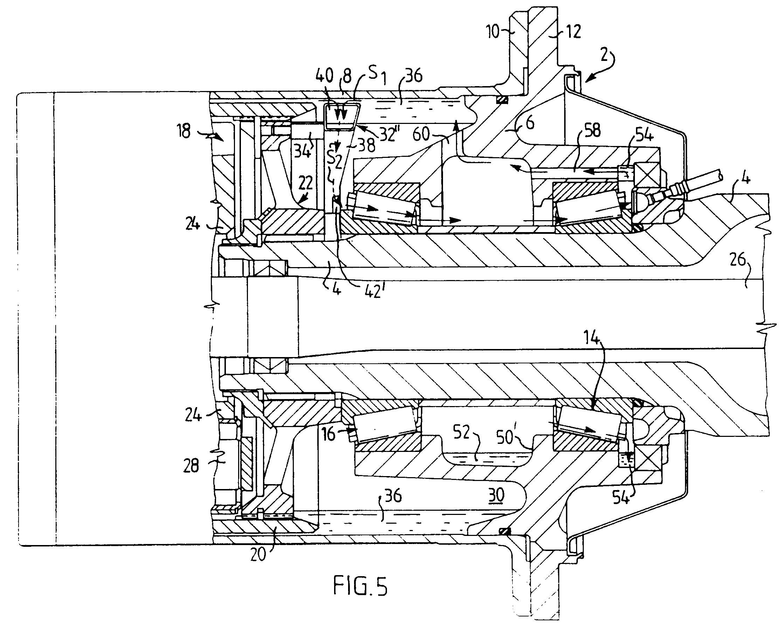

The task of oil collector 32, which is shown in greater detail in Figs. 3 and 4, is to collect oil from annular oil body 36 in oil storage space 30 as the hub is rotating. The oil collected by the oil collector flows into the hollow flow housing 38 of the oil collector via inlet 40, facing in the opposite direction to the direction of rotation of the wheel hub, and then to housing 38. The flow of the oil through this inlet 40 is denoted in Fig. 1 by two flow arrows S₁ on the inside of hub cap 8. The oil collected in oil collector 32 and flowing through inlet 40 is deflected inside housing 38 in an arc-shaped trajectory from inlet 40 to an outlet 42, at the inner end of flow housing 38 located nearest axle journal 4. Oil collector 32 therefore acts as a sort of stationary tubular guide blade which collects oil from oil body 36 and converts some of the kinetic energy of the collected oil to compressive energy due to the deflection of the direction of oil flow inside housing 38 (see Fig. 3), which compressive energy causes the oil to flow radially inwards through housing 38 from inlet 40 to outlet 42. The flow of oil inside housing 38 is denoted in Fig. 1 by dotted arrows S₂.

The oil flows from outlet 42 of housing 38 via an axial duct 44 on the outside of axle journal 4 to an annular space 46 on the outside of the axle journal in an area between wheel bearings 14 and 16. Space 46 is connected via hole 48 to arc-shaped chambers 50 located between the bearings, inside housing part 6. The oil can then flow out from oil body 52, also arc-shaped, in the said chamber 50, both to the left as shown in Fig. 1 (see flow arrow S₃) through outer wheel bearing 16, and to the right as shown in Fig. 1 (see flow arrow S₄) through inner wheel bearing 14. The oil which has passed through outer wheel bearing 16 then runs directly out to oil storage space 30, and therefore fills annular oil body 36, as denoted by flow arrows S₅.

However, after lubricating inner wheel bearing 14, the oil flows in a special, completely different return trajectory back to oil storage space 30 and the annular oil body 36 contained therein. For this purpose an annular collection chamber 54 is provided directly radially outside bearing 14 at its inner end. Collection chamber 54 is connected with to pockets 56 between the ends of arc-shaped chambers 50 via axial holes 58 (see Figs. 1 and 2). Both pockets 56 are in turn connected to oil storage space 30 via radially directed holes 60 in housing part 6. Pockets 56 between the adjacent ends of the two arc-shaped chambers 50 comprise the spaces between wall sections 62, which form terminations of chambers 50 and which have a radial extension exceeding the maximum radial depth of oil body 52 in the respective chambers 50.

For more details of the design of oil collector 32, constructed as a flow deflecting oil control mechanism, reference is made, for the sake of simplicity, to Figs. 3 and 4, which show an embodiment in which the oil collector has a flow housing 38, consisting of pressed plate and comprising a flat base plate 64 and pressed plate section 66 connected to it, with an approximately Y-shaped internal flow passage from the two inlets 40 to the common outlet 42. However, the flow passage may, within the scope of the invention, be provided with an internal shape other than a Y-shape, e.g. a T-shape.

In an alternative embodiment, shown in Fig. 1a, the oil collecting mechanism consists of a funnel-like oil collecting device 32', with an oil splash collecting inlet section 33 which faces the inside of the hub cap and which extends outwards (upwards) in the shape of a funnel. In its radially inner section the funnel-shaped inlet section passes into a narrower, almost tubular oil guide section 35, whose downstream end connects to and guides the collected oil into axial duct 44 on the outside of axle journal 4. Oil collection mechanism 32' is secured to hub section 37 of carrier 22, and the task of the extended inlet section 33 is to collect (whilst the hub is rotating) oil and oil drops which splash around in oil storage space 30 when the oil lubricated gearwheels of the hub gear are rotating in drive engagement with each other.

In this alternative embodiment of the oil collection mechanism the kinetic energy of annular oil body 36 is certainly not converted to compressive energy (as in the case of oil collector 32 operating as a bucket/guide blade), but the collected oil runs by gravity (gravity action) down and into duct 44. However, tests carried out have clearly shown that this alternative, structurally very simple design is in many cases quite adequate for achieving satisfactory lubrication of both the outer and inner wheel bearing, even though the design in question is not as effective as the design in which the collected oil (from oil body 36) is pressurised by means of oil collector 32.

The description of the construction of the lubrication system will now be completed with a brief description of the path of flow of the lubricating oil from the inside of hub cap 8 into the wheel bearings, and from these back out to the inside of the hub cap. The description relates primarily to the embodiment shown in Fig. 1 (with oil collection mechanism 32), but also applies to the embodiment shown in Fig. 1a (with oil collector 32'). In the latter case, however, the difference is that the oil for the forced wheel bearing lubrication is collected from the oil drops splashing round in oil storage space 30 instead of from the rotating, annular oil body 36.

When the vehicle in question is driven at normal speed the oil is centrifuged radially outwards in hub gear 18 by the centrifugal force towards the inside of hub cap 8, where the oil accumulates and forms annular oil body 36, which consists of a film of oil 10 - 20 mm thick round the inside of the hub cap. This oil film then rotates at the speed of the wheel mounted on wheel hub 2, which speed may be assumed to lie within the range of 400-600 rpm at the normal driving speed mentioned. Hub gear 18 comprises gearwheels in driving engagement with each other and having radially outer parts which extend out into oil body 36 and give rise to agitation in this annular oil film. This agitation causes a certain quantity of oil to be loosened from the oil film to form oil drops thrown around or oil splashes in oil storage space 30, which are collected and used for the forced lubrication of the wheel bearings in the design with funnel-shaped oil collector 32'.

Oil collector 32, which is rigidly mounted in relation to axle journal 4 and whose inlet 40 is located at least partially below the surface of oil film 36, collects oil flowing past and guides it to the inlet end of duct 44. The oil is then fed further via this duct to annular space 46, where the oil is collected in the lower half and runs down via holes 48 into arc-shaped chambers 50 between wheel bearings 14 and 16. The oil is centrifuged outwards by the centrifugal force and builds up an arc-shaped oil body 52 (in the form of an oil film approximately 20 mm thick) in both arc-shaped chambers 50, which are separated by the two pockets 56 demarcated by wall sections 62. The wall sections on the sides of pockets 56 are of such a height (in the radial direction of the hub) that the oil cannot flow out from chambers 50 to intervening pockets 56 but instead runs out through adjacent wheel bearing 14 and 16 respectively, which thereby receive their required lubrication. The oil which flows through outer wheel bearing 16 runs out into storage space 30 on the inside of hub cap 8 and replenishes oil film 36 at that point.

The oil which flows through inner wheel bearing 14 is centrifuged outwards by the centrifugal force and runs from annular collection chamber 54 through holes 58 into pockets 56, and is then centrifuged from these pockets via holes 60 out into the hub cap, replenishing oil film 36 at that point.

The oil therefore completes a separate circuit for each wheel bearing, and the oil flow in both these circuits then continues in the same away as long as the wheel (hub 2) rotates at a sufficiently high speed.

At very low speeds, however, the oil will not complete the circuits described because oil collector 32 is not then able to generate sufficient inward pressure and the action of the centrifugal force on the oil is insufficient. Instead the oil level in wheel hub 2 is so high that the lower halves of the bearing halves remain constantly below the oil level thereby ensuring satisfactory lubrication of both bearings.

Finally, reference is made to Fig. 5, which shows a wheel support device of the same general type as that shown in Fig. 1, but with a much simplified lubrication system according to the invention. For the sake of simplicity the description below is limited mainly to the parts of the lubrication system which differ from the system already described above.

In this simplified embodiment the oil collector, denoted by 32'', has an axially directed outlet 42', which is located close to adjacent rolling bodies (taper bearings in the case shown) of the outer wheel bearing 16.

The oil collected and pressurised by oil collector 32'' is therefore sprayed directly against the side of outer wheel bearing 16 facing hub gear 18, where some of the oil hitting the bearing and its rolling bodies penetrates the bearing and lubricates the same. An annular chamber 50' is provided in wheel hub 2 between outer wheel bearing 16 and inner bearing 13. The oil which has now flowed past and lubricated outer bearing 16 is therefore fed into chamber 50', and from there will be fed, at least partially, further into and through inner wheel bearing 14, which consequently receives sufficient lubrication to enable the bearing to operate satisfactorily and prevent blue tarnishing. The oil which therefore flows past and lubricates inner wheel bearing 14 will therefore be fed into annular collection chamber 54, from which it is then returned via one or more holes 58, chamber 50' and hole 60 to oil storage space 30.

In this simplified embodiment there is therefore no requirement for an axial discharge duct (corresponding to duct 44 shown in Fig. 1) and an annular distribution space (as 46 shown in Fig. 1) on the outside of axle journal 4. Nor need annular chamber 50' be provided with pockets demarcated by wall sections (as 62 shown in Fig. 1-2). Although the lubrication will not be as efficient in this simplified design of the lubrication system as in the system shown in Figs. 1-4, highly accurate lubrication is nevertheless achieved in most cases because the oil is supplied to the bearing pair 16, 14 at a significant pressure generated by oil collector 32'', which operates very efficiently as a pressure generating guide blade mechanism.

## Claims

1. Lubrication system in a wheel support device, comprising an axle journal (4) connected to a wheel suspension component belonging to a vehicle, a wheel hub (2) rotatably mounted on the axle journal, with a hub gear (18) in which the lubrication system provides lubrication of the hub gear (18), and the inner and outer bearings (14 and 16 respectively), viewed in the axial direction, with which the wheel hub (2) is mounted on the axle journal, which wheel hub (2) comprises a hub cap (8) surrounding the bearings, on the inside of which cap is provided an annular oil storage space (30) for lubricating oil circulating in the lubrication system, **characterised** in that an oil collecting mechanism (32; 32'), rigidly fitted in relation to the axle journal (4), is arranged inside the hub cap, which mechanism is designed to collect oil and/or oil drops in the oil storage space (30) whilst the hub is rotating, and to force guide the same to an annular space (46) located on the outside of the axle journal, which space is connected to at least one arc-shaped chamber (50) located between the bearings, in the wheel hub (2), from which oil is able to flow out through both the outer (16) and the inner wheel bearing (14), where special oil return passages (54, 58, 56, 60) separate from the connection to the arc-shaped chamber (50) are provided in the hub, which passages are designed to guide oil which has passed through the inner bearing (14) back to the annular oil storage space (30).

2. Lubrication system according to claim 1, **characterised** in that the oil collection mechanism consists of a funnel-like oil collector (32'), with an upwardly directed inlet section extending in the shape of a funnel, designed to collect oil drops and oil splashes present in the oil storage space (30) and deriving from the gearwheels of the hub gear (18).

3. Lubrication system according to claim 1, **characterised** in that the oil collecting mechanism is designed as an oil control mechanism (32) which extends from the area of the inside of the hub cap (8) to the area of the outer wheel bearing (16).

4. Lubrication system according to claim 3, **characterised** in that the oil control mechanism comprises an oil collector (32) with an inlet (40) in the outer part and a guide blade section extending in the shape of an arc from the inlet into (16) an outlet arranged alongside the outer wheel bearing (16) adjacent to the outside of the axle journal (4).

5. Lubrication system according to claim 4, **characterised** in that the oil collector (32) comprises a hollow flow housing (38) with at least one inlet (40) directed in the peripheral direction of the oil storage space, in the outer part located nearest the inside of the hub cap (8), and an outlet (42) connected to this inlet in the part located nearest the outside of the axle journal (4).

6. Lubrication system according to claim 5, **characterised** in that the flow housing (38) has a pair of opposing inlets (40) in the part nearest the inside of the hub cap (8), where the outlet (42) is connected to the two inlets via a Y- or T-shaped passage in the flow housing (38).

7. Lubrication system according to claim 1, **characterised** in that two different arc-shaped chambers (50), extending in the peripheral direction, are provided in the wheel hub (2) and are connected to the annular space (46) on the outside of the axle journal (4), which two chambers (50) are separated from each other by essentially radially directed wall sections (62) in the wheel hub at the ends of the chambers, and in that pockets (56) are provided between the wall sections (62) at the respective adjacent ends of the arc-shaped chambers, which pockets constitute parts of the special oil return passages for guiding oil from the inner bearing (14) back out to the oil storage space (30).

8. Lubrication system in a wheel support device comprising an axle journal (4) connected to a wheel suspension component belonging to a vehicle, a wheel hub (2) rotatably mounted on the axle journal, with a hub gear (18), where the lubrication system provides lubrication of the hub gear (18) and of the inner and outer wheel bearings (14 and 16 respectively), viewed in the axial direction, with which the wheel bearing (2) is mounted on the axle journal, which wheel hub (2) comprises a hub cap (8) surrounding the bearings, on the inside of which cap is provided an annular oil storage space (30) for lubricating oil circulating in the lubrication system, **characterised** in that an oil control mechanism (32''), rigidly fitted in relation to the axle journal (4), is arranged inside the hub cap, which mechanism is designed to collect oil (36) in the oil storage space (30) whilst the hub is rotating, and to force guide the same to an area of the side of the outer wheel bearing (16) facing the hub gear (18), where an annular chamber (50') is provided in the wheel hub (2) between the wheel bearings (16, 14), through which chamber oil which has penetrated through the outer wheel bearing (916) can be fed into the inner wheel bearing (14), and in that special oil return passages (54, 58, 50, 60) are provided in the hub, which passages are designed to guide oil which has passed through the inner bearing (14) back to the annular oil storage space (30).

9. Lubrication system according to claim 8, **characterised** in that the oil control mechanism is designed as an oil collector (32'') which comprises a hollow flow housing (38) with at least one inlet (40) directed in the peripheral direction of the oil storage space in the part located nearest the inside of the hub cap (8), and an axially directed outlet (42') connected to this inlet and adjacent to rolling bodies in the outer wheel bearing (16).

10. Lubrication system according to claim 9, **characterised** in that the flow housing (38) has a pair of opposing inlets (40) in the part nearest the inside of the hub cap (8), where the outlet (42') is connected to the two inlets via a Y- or T-shaped passage in the flow housing (38).

## Patentansprüche

1. Schmieranlage in einer Laufradträgervorrichtung, mit einem Achszapfen (4), der mit einem zu einem Fahrzeug gehörenden Radaufhängungs-Bauteil verbunden ist, einer auf dem Achszapfen drehbar angeordneten Radnabe (2) mit einem Nabengetriebe (18), in dem die Schmieranlage für die Schmierung des Nabengetriebes (18) sorgt, und mit, bezogen auf die axiale Richtung, inneren und äußeren Lagern (14 bzw. 16), mit denen die Radnabe (2) auf dem Achszapfen montiert ist, wobei die Radnabe (2) eine die Lager umgebende Nabenkappe (8) aufweist, in deren Innenraum ein kreisringförmiger Ölspeicherraum (30) für in der Schmieranlage umgewälztes Schmieröl vorgesehen ist,
dadurch **gekennzeichnet,** daß
eine in bezug auf den Achszapfen (4) starr angeordnete Ölauffangvorrichtung (32; 32') in Radkappe angeordnet und so ausgelegt ist, daß sie bei Drehung der Nabe Öl und/oder Öltropfen im Ölspeicherraum (30) auffängt und sie zwangsläufig zu einem auf der Außenseite des Achszapfens angeordneten kreisringförmigen Raum (46) leitet, der mit wenigstens einer zwischen den Lagern in der Radnabe (2) angeordneten bogenförmigen Kammer (50) verbunden ist, aus der Öl sowohl durch das äußere (16) als auch das innere Radlager (14) auszuströmen vermag, wobei in der Nabe spezielle, von der Verbindung mit der bogenförmigen Kammer (50) getrennte Ölrücklaufkanäle (54, 58, 56, 60) vorgesehen und so ausgelegt sind, Öl, das durch das innere Lager (14) hindurchgetreten ist, zum kreisringförmigen Ölspeicherraum (30) zurückzuleiten.

2. Schmieranlage nach Anspruch 1,
dadurch **gekennzeichnet,** daß
die Ölauffangvorrichtung aus einem trichterähnlichen Ölsammler (32') besteht, der einen nach oben gerichteten Einlaßabschnitt aufweist, welcher sich in Gestalt eines Trichters erstreckt und zum Auffangen von Öltropfen und Ölspritzern ausgelegt ist, die sich im Ölspeicherraum (30) befinden und von den Zahnrädern des Nabengetriebes (18) kommen.

3. Schmieranlage nach Anspruch 1,
dadurch **gekennzeichnet,** daß
die Ölauffangvorrichtung als Ölsteuervorrichtung (32) ausgelegt ist, die sich vom Innenbereich der Nabenkappe (8) bis zum Bereich des äußeren Radlagers (16) erstreckt.

4. Schmieranlage nach Anspruch 3,
dadurch **gekennzeichnet,** daß
die Ölsteuervorrichtung einen Ölsammler (32) mit einem außengelegenen Einlaß (40) und einem Leitschaufelabschnitt umfaßt, der sich bogenförmig vom Einlaß in einen am äußeren Radlager (16), an die Außenseite des Achszapfens (4) angrenzend angeordneten Auslaß erstreckt.

5. Schmieranlage nach Anspruch 4,
dadurch **gekennzeichnet,** daß
der Ölsammler (32) ein hohles Strömungsgehäuse (38) mit wenigstens einem in Umfangsrichtung des Ölspeicherraums gerichteten, außen, der Innenseite des Radkappe (8) nächstgelegen angeordneten Einlaß (40) und einen Auslaß (42) aufweist, der mit diesem Einlaß in dem der Außenseite des Achszapfens (4) nächstgelegenen Abschnitt verbunden ist.

6. Schmieranlage nach Anspruch 5,
dadurch **gekennzeichnet,** daß
das Strömungsgehäuse (38) zwei sich gegenüberliegende Einlässe (40) in dem der Innenseite der Radkappe (8) nächstgelegenen Abschnitt aufweist, wobei der Auslaß (42) mit den beiden Einlässen über einen Y- oder T-förmigen Durchlaß im Strömungsgehäuse (38) verbunden ist.

7. Schmieranlage nach Anspruch 1,
dadurch **gekennzeichnet,** daß
in der Radnabe (2) zwei verschiedene, bogenförmige, sich in Umfangsrichtung erstreckende Kammern (5) vorgesehen und mit dem kreisringförmigen Raum (46) auf der Außenseite des Achszapfens (4) verbunden sind, wobei die beiden Kammern (50) voneinander durch im wesentlichen radialgerichtete Wandabschnitte (62) in der Radnabe an den Enden der Kammern getrennt sind, und daß zwischen den Wandabschnitten (62) an den zugehörigen einander benachbarten Enden der bogenförmigen Kammern Taschen (56) vorgesehen sind, die Teil der speziellen Ölrücklaufkanäle zum Zurückleiten des Öls vom inneren Lager (14) nach außen zum Ölspeicherraum (30) sind.

8. Schmieranlage in einer Laufradträgervorrichtung, mit einem Achszapfen (4), der mit einem zu einem Fahrzeug gehörenden Radaufhängungs-Bauteil verbunden ist, einer auf dem Achszapfen drehbar angeordneten Radnabe (2) mit einem Nabengetriebe (18), in dem die Schmieranlage für die Schmierung des Nabengetriebes (18) sorgt, und mit, bezogen auf die axiale Richtung, inneren und äußeren Lagern (14 bzw. 16), mit denen die Radnabe (2) auf dem Achszapfen montiert ist, wobei die Radnabe (2) eine die Lager umgebende Nabenkappe (8) aufweist, in deren Innenraum ein kreisringförmiger Ölspeicherraum (30) für in der Schmieranlage umgewälztes Schmieröl vorgesehen ist,
dadurch **gekennzeichnet,** daß
im Innenraum der Nabenkappe eine in bezug auf den Achszapfen (4) starr angeordnete Ölsteuervorrichtung (32'') angeordnet und so ausgelegt ist, daß sie bei Drehung der Nabe Öl (36) im Ölspeicherraum (30) auffängt und dasselbe zwangsläufig zu einem Bereich auf der dem Nabengetriebe (18) zugewandten Seite des äußeren Radlagers (16) leitet, wobei in der Radnabe (2) zwischen den Radlagern (14, 16) eine kreisringförmige Kammer (50') vorgesehen ist, durch die Öl, das durch das äußere Radlager (16) hindurchgetreten ist, in das innere Radlager (14) gefördert werden kann, und daß in der Nabe spezielle Ölrücklaufkanäle (54, 58, 56, 60) vorgesehen und so ausgelegt sind, daß sie Öl, das durch das innere Lager (14) hindurchgetreten ist, zum kreisringförmigen Ölspeicherraum (30) zurückleiten.

9. Schmieranlage nach Anspruch 8,
dadurch **gekennzeichnet,** daß
die Ölsteuervorrichtung als Ölsammler (32'') ausgelegt ist, der ein hohles Strömungsgehäuse (38) mit wenigstens einem Einlaß (40), der in dem der Innenseite der Nabenkappe (8) nächstgelegenen Abschnitt in Umfangsrichtung des Ölspeicherraums gerichtet ist, und einen axialgerichteten Auslaß (42') aufweist, der mit diesem Einlaß verbunden und angrenzend an Wälzkörper im äußeren Radlager (16) angeordnet ist.

10. Schmieranlage nach Anspruch 9,
dadurch **gekennzeichnet,** daß
das Strömungsgehäuse (38) in dem der Innenseite der Nabenkappe (8) nächstgelegenen Abschnitt zwei sich gegenüberliegende Einlässe (40) aufweist, wobei der Auslaß (42') mit den beiden Einlässen über einen Y- oder T-förmigen Durchlaß im Strömungsgehäuse (38) verbunden ist.

## Revendications

1. Système de lubrification situé dans un dispositif de support de roue, comprenant une fusée d'essieu (4) reliée à un composant de suspension de roue faisant partie d'un véhicule, un moyeu de roue (2), monté rotatif sur la fusée d'essieu, conjointement avec un engrenage de moyeu (18), dans lequel le système de lubrification fournit une lubrification de l'engrenage de moyeu (18), et des paliers (respectivement 14 et 16), intérieur et extérieur en observant dans la direction axiale, à l'aide desquels le moyeu de roue (2) est monté sur la fusée d'essieu, moyeu de roue (2) comprenant un capuchon de moyeu (8) entourant les paliers, capuchon à l'intérieur duquel est prévu un espace de stockage d'huile (30) annulaire, pour une circulation d'huile de lubrification dans le système de lubrification, caractérisé en ce qu'un mécanisme de collecte d'huile (32 ; 32'), monté rigidement par rapport à la fusée d'essieu (4), est disposé à l'intérieur du capuchon de moyeu, ce mécanisme étant destiné à collecter de l'huile et/ou des gouttes d'huile dans l'espace de stockage d'huile (30), pendant que le moyeu tourne, et à guider de manière forcée cette huile vers un espace annulaire (46) situé à l'extérieur de la fusée d'essieu, cet espace étant relié à au moins une chambre (50) de la forme arquée, située entre les paliers, dans le moyeu de roue (2), à partir de laquelle l'huile peut s'écouler en sortant à la fois par les paliers de roue extérieur (16) et intérieur (14), dans lesquels des passages de retour d'huile (54, 58, 56, 60) spéciaux, séparés de la connexion à la chambre arquée, (50), sont prévus dans le moyeu, ces passages étant conçus, pour guider de l'huile qui est passée par le moyeu intérieur (14) afin de la ramener à l'espace de stockage d'huile (30) annulaire.

2. Système de lubrification selon la revendication 1, caractérisé en ce que le mécanisme de collecte d'huile consiste en un collecteur d'huile (32') en forme d'entonnoir, ayant une section d'entrée orientée vers le haut, s'étendant sous la forme d'un entonnoir, conçu pour collecter des gouttes d'huile et des éclaboussures d'huile présentes dans l'espace de stockage d'huile (30) et provenant des roues dentées de l'engrenage de moyeu (18).

3. Système de lubrification selon la revendication 1, caractérisé en ce que le mécanisme de collecte d'huile est conçu comme un mécanisme de commande d'huile (32), qui s'étend de la zone située à l'intérieur du capuchon de moyeu (8) à la zone du palier de roue extérieur (16).

4. Système de lubrification selon la revendication 3, caractérisé en ce que le mécanisme de commande d'huile comprend un collecteur d'huile (32) ayant une entrée (40) située dans la partie extérieure et une section d'aube de guidage, s'étendant sous la forme d'un arc depuis l'entrée dans la partie (16), une sortie étant disposée latéralement par rapport au palier de roue extérieur (16), de manière adjacente à l'extérieur de la fusée d'essieu (4).

5. Système de lubrification selon la revendication 4, caractérisé en ce que le collecteur d'huile (32) comprend un boîtier d'écoulement (38) creux, ayant au moins une entrée (40) orientée dans la direction périphérique de l'espace de stockage d'huile, dans la partie extérieure située le plus près de l'intérieur du capuchon de moyeu (8), et une sortie (42) reliée à cette entrée dans la partie située le plus près de l'extérieur de la fusée d'essieu (4).

6. Système de lubrification selon la revendication 5, caractérisé en ce que le boitier d'écoulement (38) a un couple d'entrées (40) opposées, ménagées dans la partie située le plus près de l'intérieur du capuchon de moyeu (8), la sortie (42) étant reliée aux deux entrées via un passage en forme de Y ou de T, ménagé dans le boîtier d'écoulement (38).

7. Système de lubrification selon la revendication 1, caractérisé en ce que deux chambres arquées (50) différentes, s'étendant dans la direction périphérique, sont ménagées dans le moyeu de roue (2) et sont reliées à l'espace annulaire (46) à l'extérieur de la fusée d'essieu (4), ces deux chambres (50) étant séparées l'une de l'autre par des sections de paroi (62) orientées essentiellement radialement, dans le moyeu de roue, aux extrémités des chambres, et en ce que des poches (56) sont prévues entre les sections de paroi (62) aux extrémités adjacentes respectives des chambres arquées, ces poches constituant des passages de retour d'huile spéciaux, pour guider de l'huile depuis le palier intérieur (14) afin de la ramener à l'espace de stockage d'huile (30).

8. Système de lubrification dans un dispositif de support de roue, comprenant une fusée d'essieu (4) reliée à un composant de suspension de roue faisant partie d'un véhicule, un moyeu de roue (2) monté rotatif sur la fusée d'essieu, conjointement avec un engrenage de moyeu (18), dans lequel le système de lubrification fournit une lubrification de l'engrenage de moyeu(18) et des paliers de roues (14 et 16 respectivement) intérieur et extérieur, en observant dans la direction axiale, à l'aide desquels le palier de roue (2) est monté sur la fusée d'essieu, ce moyeu de roue (2) comprenant un capuchon de moyeu (8) entourant les paliers, capuchon à l'intérieur duquel est prévu un espace de stockage d'huile (30) annulaire pour une circulation d'huile de lubrification dans le système de lubrification, caractérisé en ce qu'un mécanisme de commande d'huile (32''), monté rigidement par rapport à la fusée d'essieu (4), est disposé à l'intérieur du capuchon de moyeu, ce mécanisme étant conçu pour collecter de l'huile (36) dans l'espace de stockage d'huile (30) pendant que le moyeu tourne et pour guider de manière forcée cette dernière vers une zone située du côté du palier de roue extérieur (16), faisant face à l'engrenage de moyeu (18), où une chambre annulaire (50') est prévue dans le moyeu de roue (2) entre les paliers de roue (16, 14), chambre dans laquelle de l'huile qui a pénétré par l'intermédiaire du palier de roue extérieur (16) peut être amenée dans le palier de roue intérieur (14), et en ce que des passages de retour d'huile (54, 58, 50, 60) spéciaux sont prévus dans le moyeu, ces passages étant conçus pour guider de l'huile qui est passée par le palier intérieur (14) afin de la ramener dans l'espace de stockage d'huile (30) annulaire.

9. Système de lubrification selon la revendication 8, caractérisé en ce que le mécanisme de commande d'huile est conçu comme un collecteur d'huile (32''), qui comprend un boîtier d'écoulement (38) creux ayant au moins une entrée (40) orientée dans la direction périphérique de l'espace de stockage d'huile, dans la partie située le plus près de l'intérieur du capuchon de moyeu (8), et une sortie (42') orientée axialement, reliée à cette entrée et adjacente à des corps roulants situés dans le palier de roue extérieur (16). 10. Système de lubrification selon la revendication 9, caractérisé en ce que le boîtier d'écoulement (38) a un couple d'entrées (40) opposées, ménagées dans la partie située le plus près de l'intérieur du capuchon de moyeu (8), la sortie (42') étant reliée aux deux entrées via un passage en forme de Y ou de T ménagé dans le boîtier d'écoulement (38).
